**Europäisches Patentamt**

**European Patent Office**

**Office européen des brevets**

(19)

(11) Veröffentlichungsnummer: **0 046 848**
**B1**

# EUROPÄISCHE PATENTSCHRIFT

(12)

(45) Veröffentlichungstag der Patentschrift:
**27.12.84**

(21) Anmeldenummer: **81104685.3**

(22) Anmeldetag: **19.06.81**

(51) Int. Cl.³: **B 65 G  65/32,** B 65 G  67/04, B 65 B  1/20

(54) **Verfahren zum Befüllen von Silofahrzeugen.**

(30) Priorität: **03.09.80  DE 3033108**

(43) Veröffentlichungstag der Anmeldung:
**10.03.82 Patentblatt 82/10**

(45) Bekanntmachung des Hinweises auf die Patenterteilung:
**27.12.84 Patentblatt 84/52**

(84) Benannte Vertragsstaaten:
**AT BE CH DE FR GB IT LI LU NL SE**

(56) Entgegenhaltungen:
**DE - A - 2 514 316
DE - A - 2 810 244
DE - C - 595 796
DE - C - 836 159
DE - C - 893 497
US - A - 2 806 771
US - A - 2 815 621**

(73) Patentinhaber: **Degussa Aktiengesellschaft,
Weissfrauenstrasse 9, D-6000 Frankfurt am Main 1 (DE)**

(72) Erfinder: **Eckert, Wolfgang, Goethestrasse 16,
D-7888 Rheinfelden (DE)**

## Beschreibung

Die Erfindung betrifft ein Verfahren zum Befüllen von Silofahrzeugen mit schwach fluidisierten, hochdispersen, pulverförmigen Stoffen.

Hochdisperse, pulverförmige Stoffe, wie z.B. pyrogen hergestellte Oxide von Metalloiden, wie z.B. $Al_2O_3$, $SiO_2$ oder $TiO_2$, oder Russ zeichnen sich durch eine extreme Teilchenfeinheit und damit durch eine extrem niedrige Stampfdichte aus.

So weist z.B. pyrogen hergestelltes Siliciumdioxid je nach Type einen mittleren Teilchendurchmesser in dem Bereich von 5 bis 50 nm auf. Die Stampfdichte des pyrogen hergetellten Siliciumdioxides kann zwischen 20 und 60 g/l liegen.

Aufgrund dieser extrem niedrigen Stampfdichte beanspruchen derartige hochdisperse, pulverförmigen Stoffe ein grosses Transportvolumen.

Eine Verminderung des Transportvolumens durch zum Beispiel Vakuumentlüftung an Entlüftungswalzen vor dem Befüllen des Silofahrzeuges hat den Nachteil, dass bestimmte maximale Werte für die Stampfdichte überschritten werden. Die Folge ist, dass bestimmte anwendungstechnische Eigenschaften, wie z.B. das Verdickungsverhalten, nicht mehr den gestellten Anforderungen entsprechen.

Ein Transport in Silofahrzeugen ist deshalb nur mit nicht entlüftetem hochdispersem, pulverförmigem Stoff möglich und daher auf Grund des grossen Volumen/Gewicht-Verhältnisses mit relativ hohen Kosten belastet.

Aus der DE-C 595 796 ist eine Einrichtung zum Überfüllen von staubförmigen Stoffen aus einem höher gelegenen Behälter oder Bunker in einen tiefer angeordneten bekannt. Während des Füllvorganges, der durch einen auf der Oberseite des tiefer gelegenen Behälters befindlichen Füllstutzen vorgenommen wird, herrscht in beiden Behältern Unterdruck.

Die Aufgabe der Erfindung ist es, hochdisperse, pulverförmige Stoffe bei dem Befüllen des Transportfahrzeuges so zu handhaben, dass das Transportvolumen deutlich gemindert wird, ohne dass die anwendungstechnischen Eigenschaften beeinträchtigt werden.

Gegenstand der Erfindung ist ein Verfahren zum Befüllen von Silofahrzeugen mit schwach fluidisierten, hochdispersen, pulverförmigen Stoffen, dadurch gekennzeichnet, dass man die Stoffe in den gegebenenfalls schräggestellten Silobehälter des Silofahrzeuges von unten direkt aus der Silofalleitung mittels einer Druckluftmembranpumpe einpumpt und Luft durch im Silobehälter axial angeordnete erste Entlüftungsleitungen und mindestens eine im Silobehälter über eine Deckelöffnung geführte zweite Entlüftungsleitung entweichen lässt, den oder die Domdeckel des Silobehälters schliesst, gegebenenfalls den Silobehälter in die waagrechte Stellung bringt, weiteren Stoff mittels der Membranpumpe in den Silobehälter einpumpt und Luft nur durch die axial angeordneten ersten Entlüftungsleitungen entweichen lässt.

Die Fluidisierung des hochdispersen, pulverförmigen Stoffes kann mittels Luft erfolgen.

In einer bevorzugten Ausführungsform des erfindungsgemässen Verfahrens kann man während des Einpumpens des hochdispersen, pulverförmigen Stoffes mittels einer oder mehrerer Saugleitungen die Luft aus dem Silobehälter entfernen.

So kann man beispielsweise die Luft mittels Entlüftungsleitungen (Saugleitungen) entfernen, die axial in dem Silobehälter des Silofahrzeuges angeordnet sind.

Das erfindungsgemässe Verfahren weist den Vorteil auf, dass hochdisperse, pulverförmige Stoffe in grösstmöglicher Stampfdichte in einem Silofahrzeug transportiert werden können, ohne dass ihre anwendungstechnischen Eigenschaften beeinträchtigt werden.

Auf Grund des erfindungsgemässen Verfahrens ist es möglich, beispielsweise 4,0 t pyrogen hergestelltes Siliciumdioxid mit einer Stampfdichte von ca. 30 g/l und einer BET-Oberfläche von 318 m²/g in einen 55 m³ fassenden Silobehälter zu pumpen. Das pyrogen hergestellte Siliciumdioxid weist nach dem Transport eine Stampfdichte von 38 g/l und ein gegenüber dem unverdichteten pyrogen hergestellten Siliciumdioxid unverändertes Verdickungsverhalten von 3600 mpas auf.

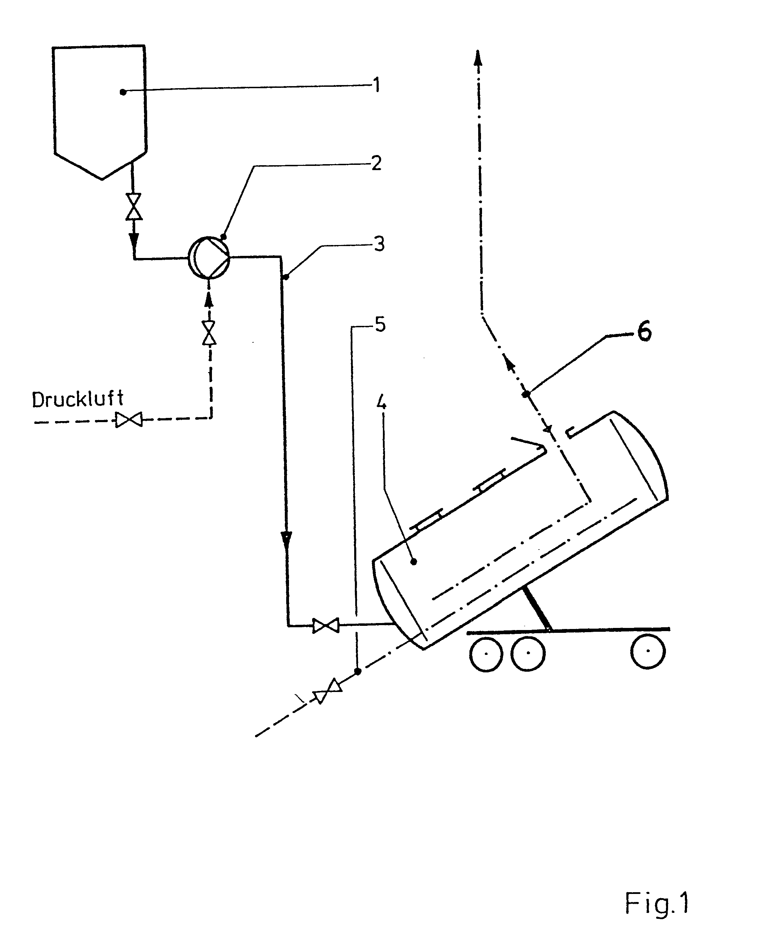

Das erfindungsgemässe Verfahren wird anhand der Zeichnung näher erläutert. So zeigt die Figur 1 eine schematische Anordnung der verwendeten Geräte.

Gemäss der Figur 1 fällt pyrogen hergestelltes Siliciumdioxid aus dem Silo 1 auf die Membranpumpe 2 und wird von dort über den Füllschlauch 3 von unten in den schräggestellten Silobehälter 4 eingepumpt.

Gleichzeitig wird über die Entlüftungsleitungen 5, 6 Luft aus dem Silobehälter abgesaugt.

Weiterer Stoff wird nach dem Schliessen der Domdeckel des Silobehälters 4 mittels der Membranpumpe 2 eingepumpt, wobei man die Luft durch die axial angeordneten ersten Entlüftungsleitungen 5 entweichen lässt.

## Patentansprüche

1. Verfahren zum Befüllen von Silofahrzeugen mit schwach fluidisierten, hochdispersen, pulverförmigen Stoffen, dadurch gekennzeichnet, dass man die Stoffe in den gegebenenfalls schräggestellten Silobehälter (4) des Silofahrzeuges von unten direkt aus der Silofalleitung (3) mittels einer Druckluftmembranpumpe (2) einpumpt und Luft durch im Silobehälter (4) axial angeordnete erste Entlüftungsleitungen (5) und mindestens eine im Silobehälter über eine Deckelöffnung geführte zweite Entlüftungsleitung (6) entweichen lässt, den oder die Domdeckel des Silobehälters (4) schliesst, gegebenenfalls den Silobehälter (4) in die waagerechte Stellung bringt, weiteren Stoff mittels der Membranpumpe (2) in den Silobehälter einpumpt (4) und Luft nur durch die axial angeordneten ersten Entlüftungsleitungen (5) entweichen lässt.

2. Verfahren nach Anspruch 1, dadurch gekennzeichnet, dass man während des Einpumpens des hochdispersen, pulverförmigen Stoffes mittels einer oder mehrerer der Entlüftungsleitungen (5, 6) Luft aus dem Silobehälter (4) absaugt.

**Revendications**

1. Procédé pour le remplissage de véhicules-silos avec une matière pulvérulente à dispersion élevée, peu fluide, procédé caractérisé en ce que la matière est introduite par pompage dans le réservoir (4) du véhicule-silo que l'on a mis éventuellement en position inclinée, par en-dessous, directement à partir de la conduite descendante (3), au moyen d'une pompe (2) à membrane fonctionnant à l'air comprimé, et que l'air peut s'échapper par la première conduite de désaérage (5) disposée axialement dans le réservoir-silo (4), et par au moins une deuxième conduite de désaérage (6) entrant dans le silo par un orifice du couvercle, que le ou les couvercles du silo (4) sont fermés, le silo (4) est éventuellement ramené en position horizontale, que l'introduction de matière dans le silo (4) est poursuivie à l'aide de la pompe à membrane (2) et l'air ne s'échappant plus que par la première conduite de désaérage (5) axiale.

2. Procédé selon la revendication 1, caractérisé en ce que pendant l'introduction par pompage de la matière pulvérulente à dispersion élevée, l'air est évacué du silo (4) par aspiration par une ou plusieurs conduites de désaérage (5, 6).

**Claims**

1. A process for filling silo vehicles with slightly fluidised, highly-dispersed pulverulous materials, characterised in that the materials are directly pumped from the down-pipe (3) of the silo from below into the silo container (4) of the silo vehicle which may be set at an angle using a compressed air diaphragm pump (2) and air is allowed to escape through the first deaerating pipes (5) which are axially arranged in the silo container (4) and at least one second deaerating pipe (6) which passes through an opening in the top cover of the silo container (4), the top cover or covers of the silo container (4) is/are sealed, the silo container (4) is optionally brought into a horizontal position, further material is pumped into the silo container using the diaphragm pump (2) and air is only allowed to escape through the first axially arranged deaerating pipes (5).

2. A process according to claim 1, characterised in that air is drawn out of the silo container (4) by suction while the highly-dispersed, pulverulous material is pumped in using one or more of the deaerating pipes (5, 6).

Fig.1

Druckluft